# EUROPÄISCHE PATENTSCHRIFT

(11) **EP 3 720 905 B1**
(45) Veröffentlichungstag und Bekanntmachung des Hinweises auf die Patenterteilung: **08.12.2021**
(21) Anmeldenummer: 18792878.3
(22) Anmeldetag: 16.10.2018
(51) Int. Cl.: C08L 9/00, B60C 1/00, C08K 3/04, C08L 9/06

(54) **SCHWEFELVERNETZBARE KAUTSCHUKMISCHUNG, VULKANISAT DER KAUTSCHUKMISCHUNG UND FAHRZEUGREIFEN**
SULFUR CROSSLINKABLE RUBBER COMPOSITION, CROSS-LINKED RUBBER COMPOSITION AND TIRE
COMPOSITION DE CAOUTCHOUC RÉTICULABLE AU SOUFRE, COMPOSITION DE CAOUTCHOUC RÉTICULÉE ET PNEUMATIQUE

(30) Priorität: 05.12.2017 DE 102017221863
(43) Veröffentlichungstag der Anmeldung: 14.10.2020
(73) Patentinhaber: Continental Reifen Deutschland GmbH, 30165 Hannover (DE)
(72) Erfinder: SA, Catarina, 30419 Hannover (DE); TARANTOLA, Gesa, 30419 Hannover (DE); PAVON SIERRA, Viktoria, 30419 Hannover (DE); BECHEANU-BÖKE, Armand Gabriel, 30419 Hannover (DE)
(74) Vertreter: Continental Corporation
(86) Internationale Anmeldenummer: PCT/EP2018/078135
(87) Internationale Veröffentlichungsnummer: WO 2019/110176

(56) Entgegenhaltungen:
- EP-A1- 2 098 384
- EP-A1- 2 345 696
- DE-A1-102015 218 745

## Beschreibung

Die Erfindung betrifft eine schwefelvernetzbare Kautschukmischung, deren Vulkanisat und einen Fahrzeugreifen.

Da die Fahreigenschaften eines Reifens, insbesondere eines Fahrzeugluftreifens, in einem großen Umfang von der Kautschukzusammensetzung des Laufstreifens abhängig sind, werden besonders hohe Anforderungen an die Zusammensetzung der Laufstreifenmischung gestellt. Durch den teilweisen oder vollständigen Ersatz des Füllstoffes Ruß durch Kieselsäure in Kautschukmischungen wurden die Fahreigenschaften in den vergangenen Jahren insgesamt auf ein höheres Niveau gebracht. Die bekannten Zielkonflikte der sich gegensätzlich verhaltenden Reifeneigenschaften bestehen allerdings auch bei kieselsäurehaltigen Laufstreifenmischungen weiterhin. So zieht eine Verbesserung des Nassgriffs weiterhin in der Regel eine Verschlechterung des Rollwiderstandes, der Wintereigenschaften und des Abriebverhaltens nach sich. Gleichzeitig wird je nach Veränderung der Mischung das Trockenbremsverhalten, welches vom Zielkonflikt aus Rollwiderstand und Nassbremsen weitestgehend unabhängig ist, ebenfalls beeinträchtigt.

Um die Zielkonflikte im Laufstreifen zu lösen, sind schon vielfältige Ansätze verfolgt worden. So hat man beispielsweise unterschiedlichste, auch modifizierte Polymere, Harze, Weichmacher und hochdisperse Füllstoffe für Kautschukmischungen eingesetzt und man hat versucht, die Vulkanisateigenschaften durch Modifikation der Mischungsherstellung zu beeinflussen.

Aus der EP 1052270 A sind z. B. Laufstreifenmischungen auf Basis von Ruß als Füllstoff bekannt, die für einen guten Griff auf Eis unter anderem ein flüssiges Polymer, z. B. Polybutadien, enthalten.
Aus der DE 3804908 A1 sind ebenfalls Laufstreifenmischungen auf Basis von Ruß als Füllstoff bekannt, die für gute Wintereigenschaften flüssiges Polybutadien enthalten. Flüssiges Polybutadien mit hohem Vinylgehalt und einer hohen Glasübergangstemperatur (T_{g}) wird in der EP 1035164 A für Reifenlaufstreifen als Ersatz für herkömmliche Weichmacheröle vorgeschlagen.

Die DE 102008058996 A1 und die DE102008058991 A1 offenbaren als Ersatz für übliche Weichmacheröle endständig amin-modifizierte flüssige Polybutadiene bzw. carboxylendständig modifizierte flüssige Polybutadiene in Laufstreifenmischungen mit einer hohen Menge an Synthesekautschuk. Die Reifen sollen sich durch eine sehr gute Ausgewogenheit zwischen niedrigem Kraftstoffverbrauch und guten Hafteigenschaften und die Fähigkeit zur Unterdrückung der Rissbildung am Boden von Profilrillen unter gleichzeitiger Wahrung der Verschleiß festigkeit auszeichnen.

Die EP 2060604 B1 offenbart eine Kautschukmischung enthaltend ein funktionalisiertes Polymer mit einem Mw von 20000 g/mol sowie Ruß als Füllstoff in Kombination mit 60 phr Naturkautschuk.

In der US 20020082333 A1 wird zur Verbesserung der Prozessierbarkeit ein mit Triethoxysilan modifiziertes Polybutadien anstelle eines Silans in einer NR-freien Kautschukmischung auf Basis von Synthesekautschuk und Kieselsäure als Füllstoff eingesetzt.

Die Verwendung von im Stand der Technik bekanntem modifiziertem flüssigem Polybutadien zur Verbesserung der Eigenschaften wirkt sich allerdings sehr negativ auf das Bremsverhalten, insbesondere das Trockenbremsen, von Reifen aus.

Der vorliegenden Erfindung liegt nun die Aufgabe zugrunde, eine Kautschukmischung bereitzustellen, die im Vergleich zum Stand der Technik eine Verbesserung im Zielkonflikt aus Rollwiderstand und Nassbremsverhalten aufweist und zwar ohne, dass sich das Trockenbremsverhalten verschlechtert. Gleichzeitig sollen die sonstigen Eigenschaften, wie z. B. die Reißeigenschaften, auf vergleichbarem Niveau verbleiben oder sogar ebenfalls verbessert werden.

Gelöst wird diese Aufgabe durch eine schwefelvernetzbare Kautschukmischung enthaltend wenigstens folgende Bestandteile:
- Wenigstens einen Dienkautschuk und
- Wenigstens ein flüssiges lineares modifiziertes Dien-Polymer A, welches mit einer funktionellen Gruppe gemäß Formel I) an nur einem Kettenende modifiziert ist, wobei die Zahl der funktionellen Gruppen pro Molekül im Mittel von 0,8 bis 1 beträgt

I) (R¹R²R³)Si-X-NH-C(=O)-O-

wobei R¹, R² und R³ unabhängig voneinander ausgewählt sind aus Methoxy-Gruppen, Ethoxy-Gruppen, Phenoxy-Gruppen, Methyl-Gruppen, Ethyl-Gruppen und Phenyl-Gruppen, wobei jeweils wenigstens eine der Gruppen R¹, R² und R³ eine Methoxy-Gruppe, eine Ethoxy-Gruppe oder eine Phenoxy-Gruppe ist, und wobei X eine divalente AlkylGruppe mit 1 bis 6 Kohlenstoffatomen ist.

Das flüssige lineare modifizierte Dien-Polymer A wird im Rahmen der vorliegenden Erfindung auch abgekürzt als "flüssiges Polymer A" oder "Polymer A" bezeichnet.

Überraschenderweise hat sich herausgestellt, dass mit einem flüssigen Polymer A in der Kautschukmischung ein höheres Niveau im Zielkonflikt aus Rollwiderstandsverhalten und Nassbremsverhalten erzielt wird. Gleichzeitig weist die Kautschukmischung überraschenderweise ein deutlich verbessertes Trockenbremsverhalten auf.

Ein weiterer Gegenstand der vorliegenden Erfindung ist ein Vulkanisat wenigstens einer erfindungsgemäßen Kautschukmischung.

Ein weiterer Gegenstand der vorliegenden Erfindung ist ein Fahrzeugreifen, der wenigstens ein erfindungsgemäßes Vulkanisat der erfindungsgemäßen Kautschukmischung in wenigstens einem Bauteil aufweist. Bevorzugt weist der Fahrzeugreifen das wenigstens eine Vulkanisat zumindest im Laufstreifen auf.
Das erfindungsgemäße Vulkanisat und der erfindungsgemäßen Fahrzeugreifen liegen auf einem höheren Niveau im Zielkonflikt aus Rollwiderstand und Nassbremsverhalten und sind hinsichtlich Trockenbremsen verbessert.

Bei zweigeteilten Laufstreifen (oberer Teil: Cap und unterer Teil: Base) kann die erfindungsgemäße Kautschukmischung sowohl für die Cap als auch für die Base verwendet werden. Bevorzugt weist wenigstens die Cap oder wenigstens die Base oder wenigstens die Cap und die Base wenigstens ein erfindungsgemäßes Vulkanisat der erfindungsgemäßen Kautschukmischung auf.
Die erfindungsgemäße Kautschukmischung ist ferner auch für Laufstreifen geeignet, die aus verschiedenen nebeneinander und/oder untereinander angeordneten Laufstreifenmischungen bestehen (Multikomponentenlaufstreifen).

Unter Fahrzeugreifen werden im Rahmen der vorliegenden Erfindung Fahrzeugluftreifen und Vollgummireifen, inklusive Reifen für Industrie- und Baustellenfahrzeuge, LKW-, PKW- sowie Zweiradreifen verstanden.
Die erfindungsgemäße Kautschukmischung ist ferner auch für andere Bauteile von Fahrzeugreifen geeignet, wie z. B. insbesondere dem Hornprofil, sowie für innere Reifenbauteile.

Die erfindungsgemäße Kautschukmischung ist ferner auch für andere technische Gummiartikel, wie Bälge, Förderbänder, Luftfedern, Gurte, Riemen oder Schläuche, sowie Schuhsohlen geeignet.

Im Folgenden werden die Bestandteile der erfindungsgemäßen schwefelvernetzbaren Kautschukmischung näher beschrieben. Sämtliche Ausführungen gelten auch für das erfindungsgemäße Vulkanisat und den erfindungsgemäßen Fahrzeugreifen, der wenigstens ein erfindungsgemäßes Vulkanisat der erfindungsgemäßen Kautschukmischung in wenigstens einem Bauteil aufweist.

Erfindungswesentlich enthält die schwefelvernetzbare Kautschukmischung wenigstens ein flüssiges lineares modifiziertes Dien-Polymer A, und zwar bevorzugt in Mengen von 1 bis 80 phr, besonders bevorzugt 5 bis 50 phr, ganz besonders bevorzugt 10 bis 40 phr.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird in dieser Schrift auf 100 Gewichtsteile der gesamten Masse aller in der Mischung vorhandenen hochmolekularen und dadurch festen, nicht flüssigen, Kautschuke bezogen.
Unter einem "flüssigen Polymer" wird im Rahmen der vorliegenden Erfindung ein Polymer verstanden, welches bei 25 °C eine Viskosität gemäß Brookfield-Methode (Methode nach DIN EN ISO 2555) von maximal 30 000 mPas, insbesondere von 500 bis 30000 mPas, aufweist.
Bevorzugt weist das flüssige Polymer A bei 25 °C eine Viskosität von 3000 mPas bis 30000 mPas, besonders bevorzugt 3000 bis 15000 mPas, ganz besonders bevorzugt 3000 bis 10000 mPas, auf.

Das erfindungsgemäß enthaltene flüssige Polymer A sowie ggf. sonstige als Weichmacher enthaltene flüssige Polymere weisen dabei insbesondere ein Gewichtsmittels Mw des Molekulargewichtes von weniger als 20000 g/mol auf und gehen nicht als Kautschuke in die hundert Teile der phr-Berechnung ein.
Die Bestimmung des Gewichtsmittels Mw und des Zahlenmittels Mn des Molekulargewichtes der Polymere erfolgt mittels Gelpermeationschromatographie (GPC mit Tetrahydrofuran (THF) als Elutionsmittel bei 40 °C und einer Durchflussgeschwindigkeit von 1,0 mL/min sowie einer Probenkonzentration von 5 mg/ 10 mL, Referenz Polystyrol-Standard; Apparat "GPC 8020" und Detektor: "RI-8020" hergestellt von der Firma Tosoh Corporation).

Im Rahmen der vorliegenden Erfindung wird die Abkürzung Mw für das Gewichtsmittel des Molekulargewichts verwendet.

Bevorzugt weist das Polymer A ein Gewichtsmittel Mw des Molekulargewichtes gemäß GPC von 500 bis 15000 g/mol, bevorzugt 5000 bis 15000 g/mol, besonders bevorzugt 5200 bis 15000 g/mol, ganz besonders bevorzugt 5200 bis 10000 g/mol, auf.
Hiermit werden besonders gute Eigenschaften der erfindungsgemäßen Kautschukmischung und des erfindungsgemäßen Fahrzeugreifens erzielt, insbesondere im Hinblick auf die Rollwiderstands- und Trockenbrems-Eigenschaften bei optimiertem Nassbremsverhalten.

Das erfindungsgemäß enthaltene Polymer A weist bevorzugt ein Verhältnis Mw/Mn von 1,0 bis 2,0, besonders bevorzugt 1,0 bis 1,6, ganz besonders bevorzugt 1,0 bis 1,4, auf. Diese Verhältnisse von Mw/Mn sind vorteilhaft, da sie eine geringe Varianz der Viskosität bedeuten.

Das flüssige lineare modifizierte Dien-Polymer A ist mit einer funktionellen Gruppe gemäß Formel I) an nur einem Kettenende modifiziert, wobei die Zahl der funktionellen Gruppen pro Molekül im Mittel von 0,8 bis 1 beträgt

I) (R¹R²R³)Si-X-NH-C(=O)-O-

wobei R¹, R² und R³ unabhängig voneinander ausgewählt sind aus Methoxy-Gruppen, Ethoxy-Gruppen, Phenoxy-Gruppen, Methyl-Gruppen, Ethyl-Gruppen und Phenyl-Gruppen, wobei jeweils wenigstens eine der Gruppen R¹, R² und R³ eine Methoxy-Gruppe, eine Ethoxy-Gruppe oder eine Phenoxy-Gruppe ist, und wobei X eine divalente AlkylGruppe mit 1 bis 6 Kohlenstoffatomen ist.

Die Modifizierung am Kettenende einer Polymerkette wird auch als "terminale Modifizierung" oder "endständige Modifizierung" bezeichnet.
Die funktionelle Gruppe gemäß Formel I) ist dabei über das Sauerstoffatom (O-) an die Polymerkette gebunden, sodass sich dann (R¹R²R³)Si-X-NH-C(=O)-O-Polymerkette als terminal modifiziertes Polymer ergibt.

Im Gegensatz zu aus dem Stand der Technik bekannten Siloxan-modifizierten Polymeren ist das Polymer A maximal nur an jeweils einem Kettenende mit der genannten Gruppe gemäß Formel I) modifiziert. Die Polymerketten des Polymers A sind dabei nicht an beiden Kettenenden modifiziert.
Dabei können einige Polymerketten auch gänzlich unmodifiziert sein, sodass sich im Gemisch aus einer Vielzahl von Polymerketten im Mittel ein Funktionalisierungsgrad von kleiner als 1 ergibt. Erfindungsgemäß sind bei dem in der Kautschukmischung enthaltenen Polymer A 80 bis 100 % der Polymerketten an einem Kettenende modifiziert, wodurch sich für die Zahl der funktionellen Gruppen pro Molekül im Mittel Werte von 0,8 bis 1 ergeben.
Überraschenderweise weist die erfindungsgemäße Kautschukmischung enthaltend wenigstens ein Polymer A mit dem Funktionalisierungsgrad von 0,8 bis 1 gegenüber einer nicht erfindungsgemäßen Kautschukmischung enthaltend ein Polymer, welches an beiden Kettenenden modifiziert ist, ein deutlich verbessertes Trockenbrems-Verhalten auf.

Bei einer mittleren Zahl der funktionellen Gruppen von kleiner als 0,8 ergibt sich eine schlechtere Interaktion zwischen Füllstoff(en) und dem linearen modifiziertem Polymer A, wodurch die vernetzten Kautschukmischungen keine ausreichenden Eigenschaftsverbesserungen aufweisen.
Bei einer mittleren Zahl der funktionellen Gruppen von größer als 1 - dies wäre der Fall, wenn die funktionelle Gruppe nicht an nur einem Kettenende vorhanden wäre - würde die Eigenschaftsverbesserung durch eine übermäßige Interaktion zwischen Füllstoff und linearem Polymer A ebenfalls beeinträchtigt werden.
Die Zahl der funktionellen Gruppen pro Molekül beträgt bevorzugt 0,85 bis 1, besonders bevorzugt 0,9 bis 1.

Die Zahl der funktionellen Gruppen pro Molekül des linearen modifizierten Polymers A kann über ¹H-NMR (500 MHz; Konzentration von Probe / CDCl₃ 50 mg/1L, Anzahl der Aufnahmen 1024) auf Basis der Peaks basierend auf den Polymerisationsinitiatoren (unmodifiziertes Kettenende) und einer Urethan-Bindung (modifiziertes Kettenende) berechnet (Berechnung anhand der Flächenverhältnisse) werden.

Die Gruppe X ist bevorzugt eine divalente Alkyl-Gruppe mit 2 bis 4 Kohlenstoffatomen und besonders bevorzugt mit 3 Kohlenstoffatomen, und damit bevorzugt ein divalenter Propylrest. Bei einem Propylrest kann es sich um eine n-Propylgruppe oder eine i-Propylgruppe (Isopropyl) handeln.
Hiermit werden besonders gute Eigenschaften der Kautschukmischung und des Fahrzeugreifens erzielt, insbesondere hinsichtlich der Trockenbremseigenschaften.

Gemäß vorteilhafter Ausführungsformen sind die Reste R¹, R² und R³ innerhalb eines Moleküls gleich.
Gemäß einer vorteilhaften Ausführungsform sind die Reste R¹, R² und R³ Ethoxy-Gruppen.
Gemäß einer vorteilhaften Ausführungsform sind die Reste R¹, R² und R³ Methoxy-Gruppen.
Besonders bevorzugt ist X hierbei eine n-Propylgruppe oder eine i-Propylgruppe (Isopropyl), wobei eine n-Propylgruppe bevorzugt ist.

Das Polymer A basiert auf der Polymerisierung von konjugierten Dienen, wobei insbesondere einem linearem unmodifiziertem Polymer A' als Vorstufe für das modifizierte Polymer A Monomere wenigstens einer Art von konjugiertem Dien der Polymerisation als Monomere zugrunde liegen.
Als Dien ist prinzipiell jedes dem Fachmann bekannte konjugierte Dien umfasst, wie insbesondere Butadien und Isopren.
Weitere konjugierte Diene sind beispielsweise 2,3-Dimethylbutadien, 2-Phenylbutadien, 1,3-Pentadien, 2-Methyl-1,3-Pentadien, 1,3-Hexadien, 1,3-Octadien, 1,3-Cyclohexadien, 2-Methyl-1,3-Octadien, 1,3,7-Octatrien, Myrcen und Chloropren.
Bevorzugt liegen der Polymerisation Butadien und/oder Isopren Monomere zugrunde. Gemäß einer bevorzugten Ausführungsform der Erfindung enthält das unmodifizierte Polymer A' Butadien und/oder Isopren Monomere in einem Gewichtsanteil von größer oder gleich 50 Gew.-%, bevorzugt 60 bis 100 Gew.-%, besonders bevorzugt 70 bis 100 Gew.-%, bezogen auf das Gewicht des unmodifizierten Polymers A'.

Ferner kann das lineare Dien-Polymer A' bzw. das lineare terminal modifizierte Polymer A weitere Monomere umfassen, wie insbesondere aromatische Vinylverbindungen. Beispiele für aromatische Vinylverbindungen sind insbesondere Styrol, α-Methylstyrol (alpha-Methylstyrol), 2-Methylstyrol, 3-Methylstyrol, 4-Methylstyrol, 4-Propylstyrol, 4-*t-*Butylstyrol, 4-Cyclohexylstyrol, 4-Dodecylstyrol, 2,4-Dimethylstyrol, 2,4-Diisopropylstyrol, 2,4,6-Trimethylstyrol, 2-Ethyl-4-Benzylstyrol, 4-(Phenylbutyl)styrol, 1-Vinylnaphthalin, 2-Vinylnaphthalin, Vinylanthracen, N,N-Diethyl-4-Aminoethylstyrol, Vinylpyridin, 4-Methoxystyrol, Monochlorstyrol, Dichlorstyrol und Divinylbenzol. Von den aromatischen Vinylverbindungen sind Styrol, α-Methylstyrol und 4-Methylstyrol bevorzugt.

Für den Fall, dass das lineare unmodifizierte Polymer A' andere Monomere als Butadien und Isopren umfasst, beträgt deren Gewichtsanteile bezogen auf das Gewicht des lineares unmodifizierten Polymers A' nicht mehr als 50 %, bevorzugt nicht mehr als 40 Gew.-%, besonders bevorzugt nicht mehr als 30 Gew.-%.
Beispielsweise ergibt sich ein verbessertes Rollwiderstandsverhalten von vernetzten Kautschukmischungen enthaltend das modifizierte Polymer A, wenn aromatische Vinylverbindungen als Monomere in dem genannten Gewichtsverhältnis im unmodifizierten Polymer A' umfasst sind.

Gemäß einer besonders vorteilhaften Ausführungsform der Erfindung ist das Polymer A ein Polybutadien. Gemäß dieser Ausführungsform ist es bevorzugt, dass das unmodifizierte Polymer A' zu 100 Mol-% aus Butadien-Monomeren aufgebaut ist.
Das flüssige Polymer A weist bevorzugt einen Vinyl-Gehalt von nicht mehr als 90 Mol-% auf, besonders bevorzugt nicht mehr als 85 Mol-%, und ganz besonders bevorzugt nicht mehr als 80 Mol-%. Der Vinyl-Gehalt beträgt zudem bevorzugt nicht weniger als 0,5 Mol%, besonders bevorzugt nicht weniger als 1 Mol-%. Im Rahmen der vorliegenden Erfindung bezieht sich der "Vinyl-Gehalt" auf den Gesamtmolanteil der konjugierten Dieneinheiten, die über 1,2-Verbrückungen oder 3,4-Verbrückungen miteinander verbunden sind in 100 Mol-% an enthaltenen Isopren-Einheiten, Butadien-Einheiten oder anderen Monomereinheiten als Isopren und Butadien.
Der Vinyl-Gehalt kann über ¹H-NMR auf Basis der Peaks für 1,2-Bindungen oder 3,4-Bindungen gegenüber 1,4-Bindungen bestimmt werden.
Gemäß vorteilhafter Ausführungsformen weist das flüssige Polymer A einen Vinyl-Gehalt von 40 bis 80 Mol-%, besonders bevorzugt 50 bis 70 Mol-%, ganz besonders bevorzugt 55 bis 70 Mol-%, insbesondere 60 bis 65 Mol-%, auf.

Das flüssige Polymer A weist bevorzugt eine Glasübergangstemperatur T_{g} gemäß DSC ("differential scanning calorimetry"; Messung von +70 °C bis -150 °C, Temperaturänderung von 10 K/min; Bestimmung des Glasübergangspunktes aus der Peak-Spitze des DDSC (abgeleitete DSC) von -150 bis +50 °C, besonders bevorzugt -130 bis +50 °C, ganz besonders bevorzugt -130 bis +30 °C (plus 30), wiederum bevorzugt -85 bis -30 °C (minus 30), wiederum ganz besonders bevorzugt -60 bis -40 °C auf, insbesondere -55 bis -45 °C.
Hiermit ergeben sich besonders gute Rollwiderstandsindikatoren.

Erfindungsgemäß ist die Kautschukmischung schwefelvernetzbar und enthält hierzu wenigstens einen Dienkautschuk.
Als Dienkautschuke werden Kautschuke bezeichnet, die durch Polymerisation oder Copolymerisation von Dienen und/oder Cycloalkenen entstehen und somit entweder in der Hauptkette oder in den Seitengruppen C=C-Doppelbindungen aufweisen.
Der Dienkautschuk ist dabei bevorzugt ausgewählt aus der Gruppe bestehend aus natürlichem Polyisopren und/oder synthetischem Polyisopren und/oder epoxidiertem Polyisopren und/oder Butadien-Kautschuk und/oder Butadien-Isopren-Kautschuk und/oder lösungspolymerisiertem Styrol-Butadien-Kautschuk und/oder emulsionspolymerisiertem Styrol-Butadien-Kautschuk und/oder Styrol-Isopren-Kautschuk und/oder Flüssigkautschuken mit einem Molekulargewicht M_{w} von größer als 20000 g/mol und/oder Halobutyl-Kautschuk und/oder Polynorbornen und/oder Isopren-Isobutylen-Copolymer und/oder Ethylen-Propylen-Dien-Kautschuk und/oder Nitril-Kautschuk und/oder Chloropren-Kautschuk und/oder Acrylat-Kautschuk und/oder Fluor-Kautschuk und/oder Silikon-Kautschuk und/oder Polysulfid-Kautschuk und/oder Epichlorhydrin-Kautschuk und/oder Styrol-Isopren-Butadien-Terpolymer und/oder hydriertem AcrylnitrilbutadienKautschuk und/oder hydriertem Styrol-Butadien-Kautschuk.

Insbesondere Nitrilkautschuk, hydrierter Acrylnitrilbutadienkautschuk, Chloroprenkautschuk, Butylkautschuk, Halobutylkautschuk oder Ethylen-Propylen-Dien-Kautschuk kommen bei der Herstellung von technischen Gummiartikeln, wie Gurte, Riemen und Schläuche, und/oder Schuhsohlen zum Einsatz.
Die Kautschukmischung ist insbesondere für Fahrzeugreifen geeignet, wobei sie prinzipiell in jedem Bauteil verwendet werden kann, wie insbesondere dem Laufstreifen, der Seitenwand, dem Hornprofil, sowie in sonstigen sogenannten Body-Bauteilen.

Vorzugsweise ist der Dienkautschuk ausgewählt aus der Gruppe bestehend aus natürlichem Polyisopren (NR), synthetischem Polyisopren (IR), Butadien-Kautschuk (BR), lösungspolymerisiertem Styrol-Butadien-Kautschuk (SSBR), emulsionspolymerisiertem Styrol-Butadien-Kautschuk (ESBR), Butylkautschuk (IIR) und Halobutylkautschuk.

Gemäß einer besonders bevorzugten Ausführungsform der Erfindung ist der Dienkautschuk ausgewählt aus der Gruppe bestehend aus natürlichem Polyisopren (NR), synthetischem Polyisopren (IR), Butadien-Kautschuk (BR), lösungspolymerisiertem Styrol-Butadien-Kautschuk (SSBR) und emulsionspolymerisiertem Styrol-Butadien-Kautschuk (ESBR). Eine derartige Kautschukmischung ist insbesondere für den Laufstreifen von Fahrzeugreifen geeignet.

Gemäß einer besonders vorteilhaften Ausführungsform der Erfindung enthält die Kautschukmischung wenigstens ein natürliches Polyisopren und zwar bevorzugt in Mengen von 2 bis 100 phr, und gemäß einer besonders vorteilhaften Ausführungsform der Erfindung 5 bis 30 phr, ganz besonders bevorzugt 5 bis 20 phr. Hiermit wird eine besonders gute Prozessierbarkeit der erfindungsgemäßen Kautschukmischung erzielt. Gemäß einer besonders vorteilhaften Ausführungsform der Erfindung enthält die Kautschukmischung wenigstens ein Polybutadien (Butadienkautschuk) und zwar bevorzugt in Mengen von 2 bis 100 phr, und gemäß einer besonders vorteilhaften Ausführungsform der Erfindung 5 bis 50 phr, ganz besonders bevorzugt 10 bis 25 phr. Hiermit werden besonders gute Abrieb- und Reißeigenschaften bei geringem Hystereseverlust der erfindungsgemäßen Kautschukmischung erzielt.

Gemäß einer besonders vorteilhaften Ausführungsform der Erfindung enthält die Kautschukmischung wenigstens ein Styrol-Butadien-Kautschuk (SBR) und zwar bevorzugt in Mengen von 2 bis 100 phr, und gemäß einer besonders vorteilhaften Ausführungsform der Erfindung 25 bis 80 phr, ganz besonders bevorzugt 60 bis 85 phr. Hiermit werden eine gute Prozessierbarkeit bei geringem Hystereseverlust sowie guten Abrieb- und Reißeigenschaften der erfindungsgemäßen Kautschukmischung erzielt.
Bevorzugt ist der SBR hierbei ein SSBR, womit sich optimierte Hysterese-Eigenschaften ergeben.

Gemäß einer besonders vorteilhaften Ausführungsform der Erfindung enthält die Kautschukmischung ein Polymerblend aus den genannten Kautschuken NR, BR und SBR, bevorzugt SSBR, und zwar bevorzugt in den jeweils genannten Mengen in sämtlichen denkbaren Kombinationen, wobei die Summe aller enthaltenen Kautschuke 100 phr ergibt. Eine besonders vorteilhafte Ausführungsform besteht darin, dass die Kautschukmischung 5 bis 30 phr wenigstens eines natürlichen und/oder wenigstens eines synthetischen Polyisoprens und 25 bis 80 phr wenigstens eines Styrol-Butadien-Kautschuks und 5 bis 50 phr wenigstens eines Butadien-Kautschuks enthält.

Bei dem natürlichen und/oder synthetischen Polyisopren sämtlicher Ausführungsformen kann es sich sowohl um cis-1,4-Polyisopren als auch um 3,4-Polyisopren handeln. Bevorzugt ist allerdings die Verwendung von cis-1,4-Polyisoprenen mit einem cis-1,4 Anteil > 90 Gew.-%. Zum einen kann solch ein Polyisopren durch stereospezifische Polymerisation in Lösung mit Ziegler-Natta-Katalysatoren oder unter Verwendung von fein verteilten Lithiumalkylen erhalten werden. Zum anderen handelt es sich bei Naturkautschuk (NR) um ein solches cis-1,4 Polyisopren, bei welchem der cis-1,4-Anteil im Naturkautschuk größer 99 Gew.-% ist.
Ferner ist auch ein Gemisch eines oder mehrerer natürlicher Polyisoprene mit einem oder mehreren synthetischen Polyisopren(en) denkbar.

Falls in der erfindungsgemäßen Kautschukmischung Butadien-Kautschuk (= BR, Polybutadien) enthalten ist, kann es sich um alle dem Fachmann bekannten Typen handeln. Darunter fallen u.a. die sogenannten high-cis- und low-cis-Typen, wobei Polybutadien mit einem cis-Anteil größer oder gleich 90 Gew.-% als high-cis-Typ und Polybutadien mit einem cis-Anteil kleiner als 90 Gew.-% als low-cis-Typ bezeichnet wird. Ein low-cis-Polybutadien ist z.B. Li-BR (Lithium-katalysierter Butadien-Kautschuk) mit einem cis-Anteil von 20 bis 50 Gew.-%. Mit einem high-cis BR werden besonders gute Abriebeigenschaften sowie eine niedrige Hysterese der Kautschukmischung erzielt.
Das oder die eingesetzte(n) Polybutadiene kann/können mit Modifizierungen und Funktionalisierungen endgruppenmodifiziert und/oder entlang der Polymerketten funktionalisiert sein. Bei der Modifizierung kann es sich um solche mit Hydroxy-Gruppen und/oder Ethoxy-Gruppen und/oder Epoxy-Gruppen und/oder Siloxan-Gruppen und/oder Amino-Gruppen und/oder Aminosiloxan und/oder Carboxy-Gruppen und/oder Phthalocyanin-Gruppen und/oder Silan-Sulfid-Gruppen handeln. Es kommen aber auch weitere, der fachkundigen Person bekannte, Modifizierungen, auch als Funktionalisierungen bezeichnet, in Frage. Bestandteil solcher Funktionalisierungen können Metallatome sein.

Für den Fall, dass wenigstens ein Styrol-Butadien-Kautschuk (Styrol-Butadien-Copolymer) in der Kautschukmischung enthalten ist, kann es sich sowohl um lösungspolymerisierten Styrol-Butadien-Kautschuk (SSBR) als auch um emulsionspolymerisierten Styrol-Butadien-Kautschuk (ESBR) handeln, wobei auch ein Gemisch aus wenigstens einem SSBR und wenigstens einem ESBR eingesetzt werden kann. Die Begriffe "Styrol-Butadien-Kautschuk" und "Styrol-Butadien-Copolymer" werden im Rahmen der vorliegenden Erfindung synonym verwendet.

Das eingesetzte Styrol-Butadien-Copolymer kann mit den oben beim Polybutadien genannten Modifizierungen und Funktionalisierungen endgruppenmodifiziert und/oder entlang der Polymerketten funktionalisiert sein.

Bevorzugt enthält die Kautschukmischung 30 bis 300 phr, besonders bevorzugt 30 bis 250 phr, wenigstens eines Füllstoffs.
Bei dem Füllstoff kann es sich um alle denkbaren Füllstoffe für Kautschukmischungen handeln, wie insbesondere verstärkende Füllstoffe wie bevorzugt Kieselsäure und/oder Ruß und/oder weitere verstärkende Füllstoffe.
Weitere ggf. verstärkende Füllstoffe sind z.B. Kohlenstoffnanoröhrchen (carbon nanotubes (CNT) inklusive diskreter CNTs, sogenannte hollow carbon fibers (HCF) und modifizierte CNT enthaltend eine oder mehrere funktionelle Gruppen, wie Hydroxy-, Carboxy und Carbonyl-Gruppen), Graphit und Graphene und sogenannte "carbon-silica dual-phase filler".
Die erfindungsgemäße Kautschukmischung kann zudem nicht verstärkende Füllstoffe enthalten. Zu den nicht verstärkenden Füllstoffen zählen im Rahmen der vorliegenden Erfindung bevorzugt Alumosilicate, Kaolin, Kreide, Stärke, Magnesiumoxid, Titandioxid oder Kautschukgele sowie Fasern (wie zum Beispiel Aramidfasern, Glasfasern, Carbonfasern, Cellulosefasern).

Gemäß einer bevorzugten Ausführungsform der Erfindung enthält die Kautschukmischung wenigstens eine Kieselsäure, bevorzugt in Mengen von 10 bis 300 phr, besonders bevorzugt 30 bis 250 phr, ganz besonders bevorzugt 50 bis 200 phr.
Gemäß einer besonders vorteilhaften Ausführungsform der Erfindung enthält die Kautschukmischung 60 bis 200 phr, bevorzugt 80 bis 150 phr wenigsten einer Kieselsäure.

Die erfindungsgemäße Kautschukmischung ist gemäß einer bevorzugten Ausführungsform frei von Ruß, d.h. sie enthält 0 phr Ruß.

Gemäß einer weiteren bevorzugten Ausführungsform der Erfindung enthält die Kautschukmischung wenigstens einen Ruß, bevorzugt in Mengen von 0,1 bis 100 phr, besonders bevorzugt 1 bis 50 phr, ganz besonders bevorzugt 5 bis 30 phr, wiederum bevorzugt 5 bis 15 phr.

Bei der Kieselsäure kann es sich um die dem Fachmann bekannten Kieselsäuretypen, die als Füllstoff für Reifenkautschukmischungen geeignet sind, handeln. Besonders bevorzugt ist es allerdings, wenn eine fein verteilte, gefällte Kieselsäure verwendet wird, die eine Stickstoff-Oberfläche (BET-Oberfläche) (gemäß DIN ISO 9277 und DIN 66132) von 35 bis 400 m²/g, bevorzugt von 35 bis 350 m²/g, besonders bevorzugt von 85 bis 320 m²/g und ganz besonders bevorzugt von 120 bis 235 m²/g, und eine CTAB-Oberfläche (gemäß ASTM D 3765) von 30 bis 400 m²/g, bevorzugt von 30 bis 330 m²/g, besonders bevorzugt von 80 bis 300 m²/g und ganz besonders bevorzugt von 110 bis 230 m²/g, aufweist. Derartige Kieselsäuren führen z. B. in Kautschukmischungen für Reifenlaufstreifen zu besonders guten physikalischen Eigenschaften der Vulkanisate. Außerdem können sich dabei Vorteile in der Mischungsverarbeitung durch eine Verringerung der Mischzeit bei gleichbleibenden Produkteigenschaften ergeben, die zu einer verbesserten Produktivität führen. Als Kieselsäuren können somit z. B. sowohl jene des Typs Ultrasil^{®} VN3 (Handelsname) der Firma Evonik als auch hoch dispergierbare Kieselsäuren, so genannte HD-Kieselsäuren (z. B. Zeosil^{®} 1165 MP der Firma Solvay), zum Einsatz kommen.

Für den Fall, dass wenigstens zwei verschiedene Kieselsäuren, die sich z. B. durch ihre BET-Oberfläche unterscheiden, in der erfindungsgemäßem Kautschukmischung enthalten sind, beziehen sich die genannten Mengenangaben immer auf die Gesamtmenge aller enthaltenen Kieselsäuren.

Die Begriffe "Kieselsäure" und "Silika" werden im Rahmen der vorliegenden Erfindung synonym verwendet.

Als Ruße sind im Rahmen der vorliegenden Erfindung prinzipiell alle dem Fachmann bekannten Ruß-Typen denkbar. Bevorzugt wird jedoch ein Ruß eingesetzt, der eine Jodadsorptionszahl gemäß ASTM D 1510 von 20 bis 180 g/kg, besonders bevorzugt 30 bis 140 g/kg, und eine DBP-Zahl gemäß ASTM D 2414 von 30 bis 200 ml/100 g, bevorzugt 90 bis 180 ml/100g, besonders bevorzugt 110 bis 180 ml/100g, aufweist. Ein besonders geeigneter Ruß im Rahmen der vorliegenden Erfindung ist beispielsweise ein Ruß des ASTM-Typs N339 mit einer Jodadsorptionszahl von 90 g/kg und einer DBP-Zahl von 120 ml/100g.

Zur Verbesserung der Verarbeitbarkeit und zur Anbindung der Kieselsäure und anderer ggf. vorhandener polarer Füllstoffe an den Dienkautschuk können Silan-Kupplungsagenzien in Kautschukmischungen eingesetzt werden. Hierbei können ein oder mehrere verschiedene Silan-Kupplungsagenzien in Kombination miteinander eingesetzt werden. Die Kautschukmischung kann somit ein Gemisch verschiedener Silane enthalten. Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Als Silan-Kupplungsagenzien können dabei alle dem Fachmann für die Verwendung in Kautschukmischungen bekannten Silan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln:

-SCN, -SH, -NH₂ oder ―Sₓ- (mit x = 2 bis 8).

So können als Silan-Kupplungsagenzien z. B. 3-Mercaptopropyltriethoxysilan, 3-Thiocyanato-propyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid (TESPD) oder auch Gemische aus den Sulfiden mit 1 bis 8 Schwefelatomen mit unterschiedlichen Gehalten an den verschiedenen Sulfiden, verwendet werden. TESPT kann dabei beispielsweise auch als Gemisch mit Industrieruß (Handelsname X50S^{®} der Firma Evonik) zugesetzt werden.

Bevorzugt wird ein Silan-Gemisch eingesetzt, welches zu 40 bis 100 Gew.-% Disulfide, besonders bevorzugt 55 bis 85 Gew.-% Disulfide und ganz besonders bevorzugt 60 bis 80 Gew.-% Disulfide enthält. Ein solches Gemisch ist z.B. unter dem Handelsnamen Si 266^{®} der Firma Evonik erhältlich, welches z.B. in der DE 102006004062 A1 beschrieben ist. Auch geblockte Mercaptosilane, wie sie z. B. aus der WO 99/09036 bekannt sind, können als Silan-Kupplungsagens eingesetzt werden. Auch Silane, wie sie in der WO 2008/083241 A1, der WO 2008/083242 A1, der WO 2008/083243 A1 und der WO 2008/083244 A1 beschrieben sind, können eingesetzt werden. Verwendbar sind z. B. Silane, die unter dem Namen NXT (z.B. 3-(Octanoylthio)-1-Propyl-Triethoxysilan) in verschiedenen Varianten von der Firma Momentive, USA, oder solche, die unter dem Namen VP Si 363^{®} von der Firma Evonik Industries vertrieben werden.
Ferner ist es denkbar, dass eines der oben genannten Mercaptosilane, insbesondere 3-Mercaptopropyltriethoxysilan, in Kombination mit Verarbeitungshilfsmitteln (die unten aufgeführt sind), insbesondere PEG-Carbonsäureester, eingesetzt werden.
Gemäß einer bevorzugten Ausführungsform der Erfindung enthält die Kautschukmischung eine Kombination aus 3-Mercaptopropyltriethoxysilan und PEG-Carbonsäureester, wodurch besonders gute Eigenschaften ergeben, und zwar insbesondere im Hinblick auf die zu lösende technische Aufgabe sowie insgesamt ein gutes Eigenschaftsniveau hinsichtlich der sonstigen Eigenschaften.
Weiterhin kann die Kautschukmischung weitere Aktivatoren und/oder Agenzien für die Anbindung von Füllstoffen, insbesondere Ruß, enthalten. Hierbei kann es sich beispielsweise um die z.B. in der EP 2589619 A1 offenbarte Verbindung S-(3-Aminopropyl)Thioschwefelsäure und/oder deren Metallsalze handeln, wodurch sich insbesondere bei der Kombination mit wenigstens einem Ruß als Füllstoff sehr gute physikalische Eigenschaften der Kautschukmischung ergeben.

Die genannten Silane und Aktivatoren werden bei der Herstellung der Kautschukmischung bevorzugt in wenigstens einer Grundmischstufe zugegeben.

Gemäß einer besonders bevorzugten Ausführungsform enthält die Kautschukmischung wenigstens ein Silan-Kupplungsagens wie oben beschrieben, wobei das gemäß Formel I) Organosilicium-modifizierte flüssige Polymer A im Rahmen der vorliegenden Erfindung nicht hierzu zählt. Gemäß dieser bevorzugten Ausführungsform der Erfindung enthält die Kautschukmischung somit das flüssige Polymer A und wenigstens ein Silan-Kupplungsagens (Silan).

Bei dem wenigstens einen Silan handelt es sich gemäß einer bevorzugten Ausführungsform der Erfindung um wenigstens ein geblocktes und/oder wenigstens ein ungeblocktes Mercaptosilan.

Unter ungeblockten Mercaptosilanen sind Silane zu verstehen, die eine ―S-H-Gruppe aufweisen, also ein Wasserstoffatom am Schwefelatom. Unter geblockten Mercaptosilanen sind Silane zu verstehen, die eine S-SG-Gruppe aufweisen, wobei SG die Abkürzung für eine Schutzgruppe am Schwefelatom ist. Bevorzugte Schutzgruppen sind, wie unten ausgeführt Acylgruppen.
Der Ausdruck "geblocktes und/oder ungeblocktes Mercaptosilan" bedeutet, dass sowohl ein geblocktes, als auch ein ungeblocktes, als auch ein Gemisch aus geblocktem und ungeblocktem Silan in der erfindungsgemäßen Kautschukmischung enthalten sein kann. Dem Fachmann ist klar, dass sich diese Angabe auf den Anfangszustand der Bestandteile der schwefelvernetzbaren Kautschukmischung bezieht und während des Mischvorgangs und/oder der Vulkanisation die Schutzgruppen abgespalten werden und die jeweiligen Schwefelatome chemisch reagieren.

Bevorzugt weist das geblockte und/oder ungeblockte Mercaptosilan die allgemeine Summenformel IV) auf:

IV) (R⁴)₃Si-Z-S-R⁵ ,

wobei die Reste R⁴ innerhalb eines Moleküls gleich oder verschieden voneinander sein können und Alkoxy-Gruppen mit 1 bis 10 Kohlenstoffatomen sind, und
wobei R⁵ eine Acylgruppe mit 1 bis 20 Kohlenstoffatomen oder eine Wasserstoffatom ist, und
wobei Z eine Alkylgruppe mit 1 bis 10 Kohlenstoffatomen ist.

S ist die Abkürzung für Schwefel und Si für Silizium.

Geblockte Mercaptosilane tragen an dem Schwefelatom eine Schutzgruppe, in dem vorliegenden Fall in Formel IV) die Gruppe R⁵, wodurch sie auch "geschützte Mercaptosilane" genannt werden.

Gemäß einer bevorzugten Ausführungsform der Erfindung handelt es sich bei dem Mercaptosilan um das geblockte Mercaptosilan 3-Octanoylthio-1-propyltriethoxysilan, womit in oben genannter Formel IV) alle Reste R⁴ Ethoxy (OEt) sind und Z eine Propylgruppe ist und R⁵ eine Octanoylgruppe ist.

Überraschenderweise ergibt sich aus der Kombination des oben beschriebenen modifizierten flüssigen Polybutadiens mit einem geblockten und/oder ungeblockten, bevorzugt geblockten, Mercaptosilan, insbesondere 3-Octanoylthio-1-propyltriethoxysilan, ein synergistisches Zusammenwirken hinsichtlich der zu lösenden technischen Aufgabe.

Des Weiteren kann die Kautschukmischung übliche Zusatzstoffe in üblichen Gewichtsteilen enthalten, die bei deren Herstellung bevorzugt in wenigstens einer Grundmischstufe zugegeben werden. Zu diesen Zusatzstoffen zählen
a) Alterungsschutzmittel, wie z. B. N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-Isopropyl-N'-phenyl-p-phenylendiamin (IPPD), 2,2,4-Trimethyl-1,2-dihydrochinolin (TMQ),
b) Aktivatoren, wie z. B. Zinkoxid und Fettsäuren (z. B. Stearinsäure) und/oder sonstige Aktivatoren, wie Zinkkomplexe wie z.B. Zinkethylhexanoat,
c) Wachse,
d) Kohlenwasserstoffharze, wie ggf. insbesondere Klebharze
e) Mastikationshilfsmittel, wie z. B. 2,2'-Dibenzamidodiphenyldisulfid (DBD) und
f) Prozesshilfsmittel, wie insbesondere Fettsäureester und Metallseifen, wie z.B. Zinkseifen und/oder Calciumseifen
g) Weichmacher.

Gemäß einer bevorzugten Ausführungsform der Erfindung ist es vorteilhaft, wenn die Kautschukmischung wenigstens einen Weichmacher (zusätzlich zu dem genannten flüssigen Polymer A) enthält, wobei die Gesamtmenge an zusätzlichem Weichmacher bevorzugt 1 bis 90 phr, besonders bevorzugt 5 bis 70 phr, ganz besonders bevorzugt 15 bis 60 phr, beträgt. Hierdurch ergibt sich insbesondere in Kombination mit den oben genannten Bestandteilen eine besonders gute Prozessierbarkeit der Kautschukmischung, insbesondere der Extrudate vor der Vernetzung, bei gleichzeitig guten Rollwiderstandsindikatoren.

Zu den im Rahmen der vorliegenden Erfindung verwendeten Weichmachern gehören alle dem Fachmann bekannte polare und unpolare Weichmacher wie aromatische, naphthenische oder paraffinische Mineralölweichmacher, wie z.B. MES (mild extraction solvate) oder RAE (Residual Aromatic Extract) oder TDAE (treated distillate aromatic extract), oder Rubber-to-Liquid-Öle (RTL) oder Biomass-to-Liquid-Öle (BTL) bevorzugt mit einem Gehalt an polyzyklischen Aromaten von weniger als 3 Gew.-% gemäß Methode IP 346 oder Triglyceride, wie z. B. Rapsöl, oder Faktisse oder Kohlenwasserstoffharze oder zusätzliche flüssige Polymere, die nicht dem Dien-Polymer A entsprechen und deren mittleres Molekulargewicht (Bestimmung per GPC = gel permeation chromatography, in Anlehnung an BS ISO 11344:2004) insbesondere zwischen 500 und 20000 g/mol liegt, substituierte Alkyl-Ester wie z.B. Dibutylmethylendithiodiacetat, Phosphatester wie z.B. Tris(2-ethylhexyl)-phosphat.
Werden in der erfindungsgemäßen Kautschukmischung zusätzliche Flüssig-Polymere als Weichmacher eingesetzt, so gehen diese ebenfalls nicht als Kautschuk in die Berechnung der Zusammensetzung der Polymermatrix ein.
Der Weichmacher ist bevorzugt ausgewählt aus der Gruppe bestehend aus den oben genannten Weichmachern.
Der Weichmacher ist besonders bevorzugt ausgewählt aus der Gruppe bestehend aus Kohlenwasserstoffharzen, Flüssig-Polymeren und Mineralölen.
Bei der Verwendung von Mineralöl ist dieses bevorzugt ausgewählt aus der Gruppe, bestehend aus DAE (Destillated Aromatic Extracts) und/oder RAE (Residual Aromatic Extract) und/oder TDAE (Treated Destillated Aromatic Extracts) und/oder MES (Mild Extracted Solvents) und/oder naphthenische Öle.
Gemäß einer bevorzugten Ausführungsform der Erfindung enthält die Kautschukmischung wenigstens ein Mineralölweichmacher, bevorzugt wenigstens TDAE und/oder RAE als Weichmacher. Hiermit ergeben sich besonders gute Prozessierbarkeiten, insbesondere eine gute Mischbarkeit der Kautschukmischung.
Gemäß einer bevorzugten Ausführungsform der Erfindung enthält die Kautschukmischung wenigstens ein weiteres Flüssig-Polymer als Weichmacher.
Gemäß einer bevorzugten Ausführungsform der Erfindung enthält die Kautschukmischung wenigstens ein Kohlenwasserstoffharz als Weichmacher.
Dem Fachmann ist klar, dass Kohlenwasserstoffharze Polymere sind, die aus Monomeren aufgebaut sind, wobei das Kohlenwasserstoffharz durch die Verknüpfung der Monomere zueinander formal aus Derivaten der Monomere aufgebaut ist. Diese Kohlenwasserstoffharze zählen im Rahmen der vorliegenden Erfindung jedoch nicht zu den Kautschuken. Der Begriff "Kohlenwasserstoffharze" umfasst im Rahmen der vorliegenden Anmeldung Harze, die Kohlenstoffatome und Wasserstoffatome aufweisen sowie optional Heteroatome, wie insbesondere Sauerstoffatome, aufweisen können. Das Kohlenwasserstoffharz kann ein Homopolymer oder ein Copolymer sein. Unter Homopolymer wird in der vorliegenden Anmeldung ein Polymer verstanden, welches gemäß Römpp Online Version 3.28 "aus Monomeren nur einer Art entstanden ist". Bei den Monomeren kann es sich um alle dem Fachmann bekannten Monomere von Kohlenwasserstoffharzen handeln, wie aliphatische C₅-Monomere, weitere ungesättigte Verbindungen, die kationisch polymerisiert werden können, enthaltend Aromaten und/oder Terpene und/oder Alkene und/oder Cycloalkene.
In einer bevorzugten Ausführungsform der Erfindung ist das Kohlenwasserstoffharz ausgewählt aus der Gruppe bestehend aus aliphatischen Cs-Harzen und Kohlenwasserstoffharzen aus alpha-Methylstyrol und Styrol.
Das Kohlenwasserstoffharz weist bevorzugt einen Erweichungspunkt gemäß ASTM E 28 (Ring und Ball) von 10 bis 180 °C, besonders bevorzugt von 60 bis 150 °C, ganz besonders bevorzugt von 80 bis 99 °C auf. Weiterhin weist das Kohlenwasserstoffharz bevorzugt ein Molekulargewicht Mw von 500 bis 4000 g/mol, bevorzugt von 1300 bis 2500 g/mol auf

Der Mengenanteil der Gesamtmenge an weiteren Zusatzstoffen beträgt 3 bis 150 phr, bevorzugt 3 bis 100 phr und besonders bevorzugt 5 bis 80 phr.
Im Gesamtmengenanteil der weiteren Zusatzstoffe kann Zinkoxid (ZnO) enthalten sein. Hierbei kann es sich um alle dem Fachmann bekannten Typen an Zinkoxid handeln, wie z.B. ZnO-Granulat oder -Pulver. Das herkömmlicherweise verwendete Zinkoxid weist in der Regel eine BET-Oberfläche von weniger als 10 m²/g auf. Es kann aber auch ein Zinkoxid mit einer BET-Oberfläche von 10 bis 100 m2/g, wie z.B. so genannte "nano-Zinkoxide", verwendet werden.

Insbesondere bei der Verwendung der erfindungsgemäßen Kautschukmischung für die inneren Bauteile eines Reifens oder eines technischen Gummiartikels, welche direkten Kontakt zu vorhandenen Festigkeitsträgern haben, wird der Kautschukmischung in der Regel noch ein geeignetes Haftsystem, oft in Form von Klebharzen, zugefügt.

Die Vulkanisation wird bevorzugt in Anwesenheit von Schwefel und/oder Schwefelspendern und mit Hilfe von Vulkanisationsbeschleunigern durchgeführt, wobei einige Vulkanisationsbeschleuniger zugleich als Schwefelspender wirken können. Schwefel und/oder weitere Schwefelspender sowie ein oder mehrere Beschleuniger werden im letzten Mischungsschritt der Kautschukmischung zugesetzt. Dabei ist der Beschleuniger ausgewählt aus der Gruppe bestehend aus Thiazolbeschleunigern und/oder Mercaptobeschleunigern und/oder Sulfenamidbeschleunigern und/oder Thiocarbamatbeschleunigern und/oder Thiurambeschleunigern und/oder Thiophosphatbeschleunigern und/oder Thioharnstoffbeschleunigern und/oder Xanthogenat-Beschleunigern und/oder Guanidin-Beschleunigern.
Bevorzugt ist die Verwendung wenigstens eines Sulfenamidbeschleunigers, der ausgewählt ist aus der Gruppe bestehend aus N-Cyclohexyl-2-benzothiazolsufenamid (CBS) und/oder N,N-Dicyclohexylbenzothiazol-2-sulfenamid (DCBS) und/oder Benzothiazyl-2-sulfenmorpholid (MBS) und/oder N-tert.Butyl-2-benzothiazylsulfenamid (TBBS).

Als schwefelspendende Substanz können dabei alle dem Fachmann bekannten schwefelspendenden Substanzen verwendet werden. Enthält die Kautschukmischung eine schwefelspendende Substanz, ist diese bevorzugt ausgewählt aus der Gruppe enthaltend z. B. Thiuramdisulfide, wie z. B. Tetrabenzylthiuramdisulfid (TBzTD) und/oder Tetramethylthiuramdisulfid (TMTD) und/oder Tetraethylthiuramdisulfid (TETD), und/oder Thiuramtetrasulfide, wie z. B. Dipentamethylenthiuramtetrasulfid (DPTT), und/oder Dithiophosphate, wie z. B.
DipDis (Bis-(Diisopropyl)thiophosphoryldisulfid) und/oder Bis(O,O-2-ethylhexyl-thiophosphoryl)Polysulfid (z. B. Rhenocure SDT 50^{®}, Rheinchemie GmbH) und/oder Zinkdichloryldithiophosphat (z. B. Rhenocure ZDT/S^{®}, Rheinchemie GmbH) und/oder Zinkalkyldithiophosphat, und/oder 1,6-Bis(N,N-dibenzylthiocarbamoyldithio)hexan und/oder Diarylpolysulfide und/oder Dialkylpolysulfide.

Auch weitere netzwerkbildende Systeme, wie sie beispielsweise unter den Handelsnamen Vulkuren^{®}, Duralink^{®} oder Perkalink^{®} erhältlich sind, oder netzwerkbildende Systeme, wie sie in der WO 2010/049216 A2 beschrieben sind, können in der Kautschukmischung eingesetzt werden. Dieses System enthält ein Vulkanisationsmittel, welches mit einer Funktionalität größer vier vernetzt und zumindest einen Vulkanisationsbeschleuniger.

Die benötigte Menge an weiterem Schwefel in Form von elementarem Schwefel und/oder weiterem Schwefelspender richtet sich nach dem Einsatzgebiet der jeweiligen Kautschukmischung. Dem Fachmann sind die jeweiligen Mengen der Zudosierung bekannt. Bei der Zugabe von elementarem Schwefel betragen die Mengen im Fall einer Kautschukmischung für den Wulst von Fahrzeugreifen beispielsweise 0 bis 5 phr. Für Laufstreifen von Fahrzeugreifen, die in der Regel gegenüber dem Wulst einen geringeren Schwefelgehalt aufweisen, beträgt die Menge an zuzugebenden elementaren Schwefel bevorzugt 0 bis 4 phr.

Außerdem können in der Kautschukmischung Vulkanisationsverzögerer vorhanden sein.

Die Begriffe "vulkanisiert" und "vernetzt" werden im Rahmen der vorliegenden Erfindung synonym verwendet.

Ein weiterer Gegenstand der vorliegenden Erfindung ist ein Verfahren zur Herstellung der erfindungsgemäßen schwefelvernetzbaren Kautschukmischung, bei dem zunächst in ein oder mehreren Mischstufen eine Grundmischung mit allen Bestandteilen außer dem Vulkanisationssystem hergestellt wird. Durch Zugabe des Vulkanisationssystems in einer letzten Mischstufe wird die Fertigmischung erzeugt. Die Fertigmischung wird z.B. durch einen Extrusionsvorgang oder kalandrieren weiterverarbeitet und in die entsprechende Form gebracht. Anschließend erfolgt die Weiterverarbeitung durch Vulkanisation, wobei aufgrund des im Rahmen der vorliegenden Erfindung zugegebenen Vulkanisationssystems eine Schwefelvernetzung stattfindet.

Die oben beschriebene erfindungsgemäße Kautschukmischung ist besonders für die Verwendung in Fahrzeugreifen, insbesondere Fahrzeugluftreifen geeignet. Hierbei ist die Anwendung in allen Reifenbauteilen prinzipiell denkbar, insbesondere in einem Laufstreifen, insbesondere in der Cap eines Laufstreifens mit Cap/Base-Konstruktion, wie oben bereits beschrieben.
Zur Verwendung in Fahrzeugreifen wird die Mischung als Fertigmischung vor der Vulkanisation bevorzugt in die Form eines Laufstreifens gebracht und bei der Herstellung des Fahrzeugreifenrohlings wie bekannt aufgebracht.
Die Herstellung der erfindungsgemäßen Kautschukmischung zur Verwendung als Seitenwand oder sonstige Body- Mischung in Fahrzeugreifen erfolgt wie bereits beschrieben. Der Unterschied liegt in der Formgebung nach dem Extrusionsvorgang bzw. dem Kalandrieren der Mischung. Die so erhaltenen Formen der noch unvulkanisierten Kautschukmischung für eine oder mehrere unterschiedliche Body-Mischungen dienen dann dem Aufbau eines Reifenrohlings.
Als Body-Mischung werden hierbei die Kautschukmischungen für die sonstigen Bauteile eines Reifen, wie im Wesentlichen Trennplatte, Innenseele (Innenschicht), Kernprofil, Gürtel, Schulter, Gürtelprofil, Karkasse, Wulstverstärker, Wulstprofil, Hornprofil und Bandage. Zur Verwendung der erfindungsgemäßen Kautschukmischung in Riemen und Gurten, insbesondere in Fördergurten, wird die extrudierte noch unvulkanisierte Mischung in die entsprechende Form gebracht und dabei oder nachher häufig mit Festigkeitsträgern, z.B. synthetische Fasern oder Stahlcorde, versehen. Zumeist ergibt sich so ein mehrlagiger Aufbau, bestehend aus einer und/oder mehrerer Lagen Kautschukmischung, einer und/oder mehrerer Lagen gleicher und/oder verschiedener Festigkeitsträger und einer und/oder mehreren weiteren Lagen dergleichen und/oder einer anderen Kautschukmischung.

Die Erfindung soll nun anhand von Vergleichs- und Ausführungsbeispielen, die in Tabelle 1 zusammengefasst sind, näher erläutert werden.
Die Vergleichsmischung ist mit V, die erfindungsgemäße Mischung ist mit E gekennzeichnet.

Die Mischungsherstellung erfolgte nach dem in der Kautschukindustrie üblichen Verfahren unter üblichen Bedingungen in zwei Stufen in einem Innenmischer bei dem zunächst in der ersten Mischstufe (Grundmischstufe) alle Bestandteile außer dem Vulkanisationssystem (Schwefel und vulkanisationsbeeinflussende Substanzen) vermischt wurden. Durch Zugabe des Vulkanisationssystems in der zweiten Stufe (Fertigmischstufe) wurde die Fertigmischung erzeugt, wobei bei 90 bis 120 °C gemischt wurde.

Aus sämtlichen Mischungen wurden Prüfkörper durch Vulkanisation nach 20 Minuten unter Druck bei 160°C hergestellt und mit diesen Prüfkörpern für die Kautschukindustrie typische Materialeigenschaften mit den im Folgenden angegebenen Testverfahren ermittelt.

Ferner wurden Reifentests durchgeführt, und zwar in dem Vergleichsbeispiel V1 sowie in dem erfindungsgemäßen Beispielen E1 mit der Mischung jeweils als Laufstreifencap. Folgende Testmethoden wurden angewandt:
- Nassbremsen: ABS-Bremsen, Bremsdistanz aus 80 km/h, nasser Asphalt, niedriges µ (low µ)
- Trockenbremsen: ABS-Bremsen, Bremsdistanz aus 100 km/h, trockener Asphalt, hohes µ (high µ)
- Rollwiderstand: gemäß ISO 28580

Die ermittelten Werte wurden in Performance (Leistung) umgerechnet, wobei die Vergleichsmischung V1 bei jeder getesteten Eigenschaft auf 100 % Performance normiert wurde. Alle anderen Mischungsleistungen beziehen sich auf diese Vergleichsmischung V1. Hierbei bedeuten Werte < 100 % eine Verschlechterung in der Eigenschaften, während Werte > 100 % eine Verbesserung darstellen.

### Verwendete Substanzen

a) Hoch cis Nd-BR
b) SLR3402, Fa. Trinseo
c) Flüssiges Polybutadien, aber nicht erfindungsgemäß, da an beiden Kettenenden Siloxan-funktionalisiert und daher mit A^{∗} gekennzeichnet
d) Polymer A: an nur maximal einem Kettenende (terminal) modifiziertes Polybutadien, Modifizierung gemäß Formel I), mit R¹, R² und R³ = Ethoxy-Gruppen, X = divalente lineare Propylgruppe, Mw = 5400 g/mol, Mw/Mn = 1,05, Vinyl-Anteil = 65 mol-%, Glasübergangstemperatur = - 50 °C, Funktionalisierungsgrad = 0,97; Herstellung wie unten beschrieben;
e) Zeosol 1165 MP, Fa. Rhodia
f) TDAE
g) NXT, Fa. Momentive: 3-(Octanoylthio)-1-Propyl-Triethoxysilan
h) Zinkoxid, Stearinsäure, Alterungsschutzmittel, Ozonschutzwachs

### Herstellung des eingesetzten Polymers A ^{d)}

Ein sorgfältig getrockneter 5 L Autoklav wurde mit Stickstoff gespült. Anschließend wurden 1680 g Hexan, 6,2 g N,N,N',N'-Tetramethylethylendiamin und 122 g n-Butyllithium (15,6 Massen-% in Hexan-Lösung) in den Autoklaven gegeben.
Nachdem die Temperatur auf 50°C erhöht wurde, wurden 850 g Butadien schrittweise unter Rühren und Kontrolle und Einhaltung der Temperatur von 50 °C zugegeben. Eine Minute nach der Zugabe der gesamten Butadien Menge wurden 14,5 g Ethylenoxid zugegeben, wonach weitere 60 Minuten gerührt wurde. Anschließend wurde die Polymerisations-Reaktion beendet. Hiernach wurden 11,5 g Methanol zugegeben, wodurch eine Polymerlösung erhalten wurde.
Zu der erhaltenen Polymerlösung wurde Wasser mit einer Temperatur von 60°C zugegeben, bis ein Volumenverhältnis von Polymerlösung/Wasser von 2/1 erhalten wurde. Anschließend wurde für 30 Minuten gerührt und hiernach das Gemisch für 30 Minuten ruhig stehen gelassen. Nach dem Trennen der wässrigen und der Polymer-haltigen Phase wurde die wässrige Phase entfernt.
Dieser Waschvorgang wurde solange wiederholt, bis die wässrige Phase und die Polymerhaltige Phase einen pH-Wert von 6 bis 8 aufgewiesen haben, um Katalysator Rückstände zu entfernen.
Die erhaltene gewaschene Polymerlösung wurde für 8 Stunden auf 160 °C erhitzt, um das Lösungsmittel zu entfernen.
Hierdurch wurde als Vorstufe ein lineares Hydroxy Gruppen-modifiziertes Dien-Polymer (Polybutadien) erhalten.
Anschließend wurden 700 g des erhaltenen linearen Hydroxy Gruppen-modifizierten Dien-Polymers in einen 1 L Autoklaven zusammen mit 66,9 g 3-Isocyanatpropyltriethoxysilan und 14 mg Dibutylzinndilaurat gegeben.
Das Gemisch wurde bei 60°C für 3 Stunden gerührt, um die gewünschte chemische Reaktion der funktionellen Gruppe zu erreichen. Hierdurch wurde das oben beschriebene Polymer A ^{d)} erhalten.

| **Bestandteile** | **Einheit** | **V1** | **E1** |
|---|---|---|---|
| NR TSR | phr | 15 | 15 |
| BR ^{a)} | phr | 20 | 20 |
| SSBR ^{b)} | phr | 65 | 65 |
| Fl. Polymer A^{∗ c)} | phr | 20 | - |
| Fl. Polymer A ^{d)} | phr | - | 20 |
| Ruß N121 | phr | 8 | 8 |
| Kieselsäure ^{e)} | phr | 120 | 120 |
| Weichmacher ^{f)} | phr | 63 | 46 |
| Silan ^{g)} | phr | 12 | 12 |
| Zusatzstoffe ^{h)} | phr | 14 | 14 |
| Beschleuniger | phr | 4,5 | 4,5 |
| Schwefel | phr | 0,6 | 0,6 |

| **Physikalische Eigenschaften** | | | |
|---|---|---|---|
| Shore Härte A | Shore A | 56 | 52 |
| Rückprall RT | % | 33 | 26 |
| Bruchdehnung | % | 613 | 717 |
| Zugfestigkeit | MPa | 13 | 13 |

| Reifenergebnisse | | | |
|---|---|---|---|
| Rollwiderstand | % | 100 | 98 |
| Nassbremsen | % | 100 | 103 |
| Trockenbremsen | % | 100 | 103 |

Wie an Tabelle 1 erkennbar, weisen die erfindungsgemäße Kautschukmischung bzw. der erfindungsgemäße Fahrzeugreifen eine Verbesserung im Zielkonflikt aus Rollwiderstand und Nassbremsen auf. Gleichzeitig ist überraschenderweise das Trockenbremsen mit +3 % gegenüber V1 (enthaltend ein flüssiges Polymer aus dem Stand der Technik) deutlich verbessert. Dies ist insbesondere nicht unbedingt zu erwarten gewesen, da die Härte der Kautschukmischung E1 geringer ist als die von V1. Bei einer weicheren Mischung wäre zu erwarten gewesen, dass das Trockenbrems-Verhalten schlechter wird.

## Patentansprüche

1. Schwefelvernetzbare Kautschukmischung enthaltend wenigstens folgende Bestandteile:
- Wenigstens einen Dienkautschuk und
- Wenigstens ein flüssiges lineares modifiziertes Dien-Polymer A, welches mit einer funktionellen Gruppe gemäß Formel I) an nur einem Kettenende modifiziert ist, wobei die Zahl der funktionellen Gruppen pro Molekül im Mittel von 0,8 bis 1 beträgt
I) (R¹R²R³)Si-X-NH-C(=O)-O-
wobei R¹, R² und R³ unabhängig voneinander ausgewählt sind aus Methoxy-Gruppen, Ethoxy-Gruppen, Phenoxy-Gruppen, Methyl-Gruppen, Ethyl-Gruppen und Phenyl-Gruppen, wobei jeweils wenigstens eine der Gruppen R¹, R² und R³ eine Methoxy-Gruppe, eine Ethoxy-Gruppe oder eine Phenoxy-Gruppe ist, und wobei X eine divalente Alkyl-Gruppe mit 1 bis 6 Kohlenstoffatomen ist.

2. Schwefelvernetzbare Kautschukmischung nach Anspruch 1, **dadurch gekennzeichnet, dass** sie 10 bis 300 phr wenigstens einer Kieselsäure enthält.

3. Schwefelvernetzbare Kautschukmischung nach einem der Ansprüche 1 oder 2, **dadurch gekennzeichnet, dass** das Polymer A ein Polybutadien ist.

4. Schwefelvernetzbare Kautschukmischung nach einem der vorherigen Ansprüche, **dadurch gekennzeichnet, dass** X eine divalente Alkyl-Gruppe mit 2 bis 4 Kohlenstoffatomen, bevorzugt 3 Kohlenstoffatomen, ist.

5. Schwefelvernetzbare Kautschukmischung nach einem der vorherigen Ansprüche, **dadurch gekennzeichnet, dass** das Polymer A ein Gewichtsmitteln Mw des Molekulargewichtes gemäß GPC von 500 bis 15000 g/mol, bevorzugt 5000 bis 15000 g/mol, besonders bevorzugt 5200 bis 15000 g/mol, ganz besonders bevorzugt 5200 bis 10000 g/mol, aufweist.

6. Schwefelvernetzbare Kautschukmischung nach einem der vorherigen Ansprüche, **dadurch gekennzeichnet, dass** sie 1 bis 80 phr, bevorzugt 5 bis 50 phr des wenigstens einen Polymers A enthält.

7. Schwefelvernetzbare Kautschukmischung nach einem der vorherigen Ansprüche, **dadurch gekennzeichnet, dass** der Dienkautschuk ausgewählt ist aus der Gruppe bestehend aus natürlichem Polyisopren (NR), synthetischem Polyisopren (IR), Butadien-Kautschuk (BR), lösungspolymerisiertem Styrol-Butadien-Kautschuk (SSBR) und emulsionspolymerisiertem Styrol-Butadien-Kautschuk (ESBR).

8. Schwefelvernetzbare Kautschukmischung nach einem der vorherigen Ansprüche, **dadurch gekennzeichnet, dass** sie wenigstens ein Silan, bevorzugt wenigstens ein geblocktes und/oder wenigstens ein ungeblocktes Mercaptosilan, enthält.

9. Vulkanisat, welches durch Schwefelvulkanisation wenigstens einer Kautschukmischung nach einem der Ansprüche 1 bis 8 erhalten wird.

10. Fahrzeugreifen, **dadurch gekennzeichnet, dass** er in wenigstens einem Bauteil, bevorzugt wenigstens im Laufstreifen, wenigstens ein Vulkanisat nach Anspruch 9 aufweist.

11. Verwendung des Vulkanisates nach Anspruch 9 in technischen Gummiartikeln.

## Claims

1. Sulfur-crosslinkable rubber mixture comprising at least the following constituents:
- at least one diene rubber and
- at least one liquid, linear modified diene polymer A, modified with a functional group of formula I) at only one chain end, the number of functional groups per molecule being on average from 0.8 to 1
I) (R¹R²R³)Si-X-NH-C(=O)-O-
, where R¹, R² and R³ independently of one another are selected from methoxy groups, ethoxy groups, phenoxy groups, methyl groups, ethyl groups and phenyl groups, with in each case at least one of the groups R¹, R² and R³ being a methoxy group, an ethoxy group or a phenoxy group, and where X is a divalent alkyl group having 1 to 6 carbon atoms.

2. Sulfur-crosslinkable rubber mixture according to Claim 1, **characterized in that** it comprises 10 to 300 phr of at least one silica.

3. Sulfur-crosslinkable rubber mixture according to either of Claims 1 and 2, **characterized in that** the polymer A is a polybutadiene.

4. Sulfur-crosslinkable rubber mixture according to any of the preceding claims, **characterized in that** X is a divalent alkyl group having 2 to 4 carbon atoms, preferably 3 carbon atoms.

5. Sulfur-crosslinkable rubber mixture according to any of the preceding claims, **characterized in that** the polymer A has a weight-average Mw of the molecular weight by GPC of 500 to 15 000 g/mol, preferably from 5000 to 15 000 g/mol, more preferably 5200 to 15 000 g/mol, very preferably 5200 to 10 000 g/mol.

6. Sulfur-crosslinkable rubber mixture according to any of the preceding claims, **characterized in that** it comprises 1 to 80 phr, preferably 5 to 50 phr, of the at least one polymer A.

7. Sulfur-crosslinkable rubber mixture according to any of the preceding claims, **characterized in that** the diene rubber is selected from the group consisting of natural polyisoprene (NR), synthetic polyisoprene (IR), butadiene rubber (BR), solution-polymerized styrene-butadiene rubber (SSBR) and emulsion-polymerized styrene-butadiene rubber (ESBR).

8. Sulfur-crosslinkable rubber mixture according to any of the preceding claims, **characterized in that** it comprises at least one silane, preferably at least one blocked and/or at least one unblocked mercaptosilane.

9. Vulcanizate which is obtained by sulfur vulcanization of at least one rubber mixture according to any of Claims 1 to 8.

10. Vehicle tyre, **characterized in that** it comprises, in at least one component, preferably at least in the tread, at least one vulcanizate according to Claim 9.

11. Use of the vulcanizate according to Claim 9 in technical rubber items.

## Revendications

1. Mélange de caoutchouc réticulable par le soufre contenant au moins les constituants suivants :
- au moins un caoutchouc diénique et
- au moins un polymère diénique A liquide, linéaire, modifié, qui est modifié par un groupe fonctionnel selon la formule I) en seulement une extrémité de chaîne, le nombre de groupes fonctionnels par molécule valant en moyenne 0,8 à 1
I) (R¹R²R³)Si-X-NH-C(=O)-O-
R¹, R² et R³ étant choisis, indépendamment les uns des autres, parmi les groupes méthoxy, les groupes éthoxy, les groupes phénoxy, les groupes méthyle, les groupes éthyle et les groupes phényle, au moins un des groupes R¹, R² et R³ représentant à chaque fois un groupe méthoxy, un groupe éthoxy ou un groupe phénoxy et X représentant un groupe alkyle divalent comprenant 1 à 6 atomes de carbone.

2. Mélange de caoutchouc réticulable par le soufre selon la revendication 1, **caractérisé**
**en ce qu'**il contient 10 à 300 parties par cent parties de caoutchouc d'au moins une silice.

3. Mélange de caoutchouc réticulable par le soufre selon l'une quelconque des revendications 1 ou 2, **caractérisé en ce que** le polymère A est un polybutadiène.

4. Mélange de caoutchouc réticulable par le soufre selon l'une quelconque des revendications précédentes, **caractérisé en ce que** X représente un groupe alkyle divalent comprenant 2 à 4 atomes de carbone, de préférence 3 atomes de carbone.

5. Mélange de caoutchouc réticulable par le soufre selon l'une quelconque des revendications précédentes, **caractérisé en ce que** le polymère A présente une moyenne pondérale Mw du poids moléculaire selon la CPG de 500 à 15.000 g/mole, de préférence de 5000 à 15.000 g/mole, de manière particulièrement préférée de 5200 à 15.000 g/mole, de manière tout particulièrement préférée de 5200 à 10.000 g/mole.

6. Mélange de caoutchouc réticulable par le soufre selon l'une quelconque des revendications précédentes, **caractérisé**
**en ce qu'**il contient 1 à 80 parties par 100 parties de caoutchouc, de préférence 5 à 50 parties par 100 parties de caoutchouc dudit au moins un polymère A.

7. Mélange de caoutchouc réticulable par le soufre selon l'une quelconque des revendications précédentes, **caractérisé en ce que** le caoutchouc diénique est choisi dans le groupe constitué par le polyisoprène naturel (NR), le polyisoprène synthétique (IR), le caoutchouc de butadiène (BR), le caoutchouc de styrène-butadiène polymérisé en solution (SSBR) et le caoutchouc de styrène-butadiène polymérisé en émulsion (ESBR).

8. Mélange de caoutchouc réticulable par le soufre selon l'une quelconque des revendications précédentes, **caractérisé**
**en ce qu'**il contient au moins un silane, de préférence au moins un mercaptosilane bloqué et/ou au moins un mercaptosilane non bloqué.

9. Produit de vulcanisation qui est obtenu par vulcanisation par le soufre d'au moins un mélange de caoutchouc selon l'une quelconque des revendications 1 à 8.

10. Pneumatique pour véhicule, **caractérisé en ce qu'**il contient dans au moins un élément, de préférence au moins dans la bande de roulement, au moins un produit de vulcanisation selon la revendication 9.

11. Utilisation du produit de vulcanisation selon la revendication 9 dans des articles techniques en caoutchouc.
